Europäisches Patentamt

European Patent Office

Office européen des brevets

(11) Publication number: **0 187 717 B1**

# EUROPEAN PATENT SPECIFICATION

(45) Date of publication of patent specification: **18.09.91**  (51) Int. Cl.5: **G01N 21/74**, G01N 21/33

(21) Application number: **86300109.5**

(22) Date of filing: **08.01.86**

(54) Quantitative determination of selenium.

(30) Priority: **09.01.85 JP 941/85**
**09.01.85 JP 942/85**

(43) Date of publication of application:
**16.07.86 Bulletin 86/29**

(45) Publication of the grant of the patent:
**18.09.91 Bulletin 91/38**

(84) Designated Contracting States:
**DE FR GB**

(56) References cited:

**TECHNISCHES MESSEN, vol. 43, no. 11, 1976, pages 329-335; R.N. HAGER et al.: "Derivativ-Spektorskopie in der Gasanalyse"**

**ULLMANNS ENCYKLOPAEDIE DER TECH-NISCHEN CHEMIE, vol. 21, 4th edition, 1982, pages 228, 229, Verlag Chemie, Weinheim, DE**

**INTERNATIONAL LABORATORY, vol. 12, no. 8, October 1982, page 12-26, Fairfield, Con-necticut, USA; D.R. JENKE et al.: "The Woodriff constant temperature graphite fur-nace atomizer"**

(73) Proprietor: **SUMITOMO ELECTRIC INDUSTRIES LIMITED**
**No. 15, Kitahama 5-chome, Higashi-ku Osaka-shi, Osaka 541(JP)**

(72) Inventor: **Oosaka, Hajime c/o Osaka Works Sumitomo Electric Industries, Ltd.**
**1-3, Shimaya 1-chome Konohana-ku Osaka(JP)**

(74) Representative: **Cross, Rupert Edward Blount et al**
**BOULT, WADE & TENNANT 27 Furnival Street London EC4A 1PQ(GB)**

ANALYTICAL CHEMISTRY, vo. 56, no. 4, April 1984, pages 829-831, Easton, Pennsylvania, USA; C.-H. CHUNG et al.: " Graphite Furnace Atomic Absorption Spectrometry with Graphite Cloth Ribbon for Selenium Determination"

APPLIED SPECTROSCOPY, vo. 34, no. 2, March/April 1980, pages 194-200, Baltimore, USA; T. NAKAHARA et al.: "The Determination of Trace Amounts of Selenium by Hybride Generation-Nondispersive Flame Atomic Fluorescence Spectrometry"

Encyclopedia of Instrumentation and Control, Ed. Considine, McGraw-Hill Book Company, N.Y., USA, 1971, pages 707-710, "Ultraviolet Spectrophotometry"

## Description

This invention relates to a method of detecting and determining selenium quantitatively and a monitor therefor, and more particularly, it is concerned with a method of detecting and determining quantitatively gaseous selenium at a lower temperature than has been practiced hitherto by atomic absorption spectroscopic analysis.

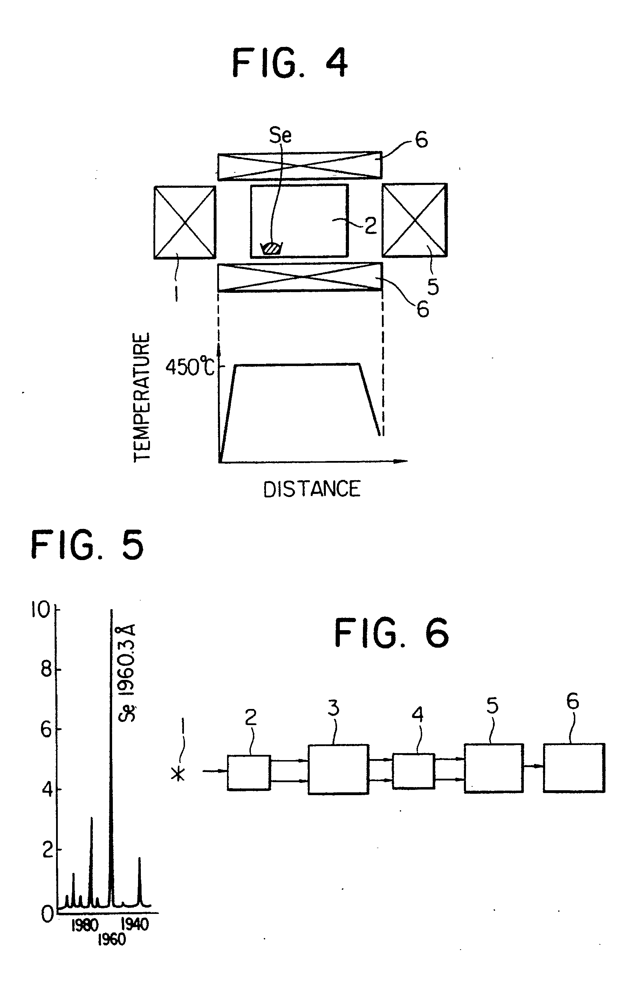

Sensitive detection and quantitative determination of selenium has lately been required by reason of the development of various compounds containing selenium for various purposes, for example, in the production of semiconductors, alloys, ceramics and glass. Atomic absorption spectroscopic analysis has hitherto been performed by atomizing selenium at high temperatures, e.g. 2000°C or higher and then detecting the atomic absorption spectrum characteristic of selenium. see e.g. Analytical Chemistry, Vol. 56. no.4, April 1984 pages 829-831, Easton, Pennsylvania U.S.A., C.H. Chung et al "Graphite Furnace Atomic Absorption Spectrometry with Graphite Cloth Ribbon for Selenium Determination." The atomic absorption spectrum of selenium has a sharp peak at a wavelength of 196.03 nm, as shown in Figure 5 (quoted from Catalogue of Hamamatsu Photonics KK). The general structure of an apparatus for the atomic absorption spectroscopic analysis utilizing this peak is shown in Figure 6: a light from a source 1 is caused to pass through a chamber 2 in which a sample is atomized, the light then traversing a photoselective means 3 such as monochromator and then entering photometric means 4-6 comprising a detector 4, an amplifier 5 and a metering stage 6. In the chamber 2 a flame is used to provide an atomizing temperature of 2000°C or higher. However such a method is not suitable for detecting selenium at a temperature below the atomizing temperature. That is, for a gaseous $Se_{2n}$ at a temperature lower than the atomizing temperature, there is no convenient method of detection and quantitative analysis.

It is an object of the present invention to provide a new method of detection and quantitative determination of selenium.

The present invention is defined in claims 1,2 and 4 The temperature lower than the atomizing temperature of selenium may be in the range 220 to 1000°C. By means of the invention, a determination of selenium down to 0.01 ppm can be made. Moreover, an in situ determination may be made.

The accompanying drawings illustrate the invention in greater detail.

Figure 1 is an absorption spectrum of gaseous selenium at 450°C, in which 1 to 16 show peaks in the spectrum;

Figure 2 is a schematic view to illustrate a method of detecting and determining selenium quantitatively according to the present invention;

Figure 3 is a graph showing the relationship between the quantity of selenium and $\log \frac{1}{T\%}$ ;

Figure 4 is a schematic view of one embodiment of an apparatus for detecting and determining selenium quantitatively according to the present invention and a graph showing a temperature distribution across the apparatus of Figure 4;

Figure 5 is an atomic absorption spectrum of selenium;

Figure 6 is a schematic view of apparatus for the atomic absorption spectroscopic analysis.

Selenium is in gaseous state and is considered to exist as $Se_2$, $Se_4$, $Se_6$ and the like at a temperature of lower than the atomizing temperature, particularly 220 to 1000°C, more particularly 220 to 695°C, but this is not fully established (Cf. O. Kubaschewski "Metallurgical Thermochemistry" Pergamonpress (1967)).

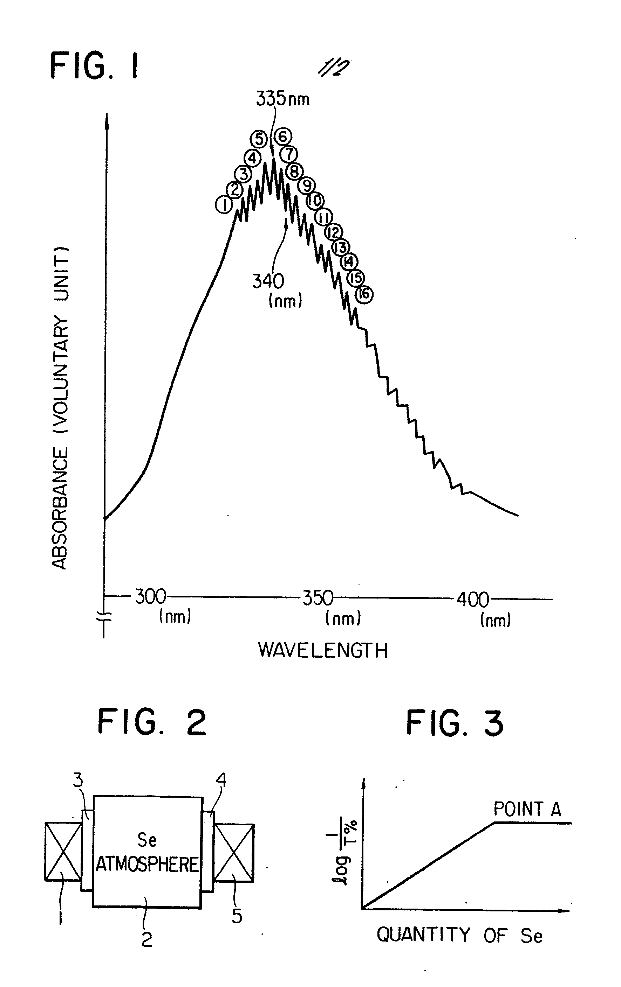

The inventor has found a total of sixteen absorption lines 1 to 16, as shown in Figure 1, relating to this gaseous selenium. In Figure 1, the ordinate shows the absorbance (voluntary units) and the abscissa shows the wavelength (nm). The wavelengths of the peaks numbered 1 to 16 are as follows:

1 ... 324 nm, 2 ... 326 nm, 3 ... 328 nm,
4 ... 330 nm, 5 ... 332.5 nm, 6 ... 335 nm,
7 ... 337.5 nm, 8 ... 340 nm, 9 ... 342 nm,
10 ... 344.5 nm. 11 ... 347 nm, 12 ... 350 nm
13 ... 352.5 nm, 14 ... 355 nm, 15 ... 357.5 nm
16 ... 360 nm

In the absorption spectrum of Figure 1, the sixth peak at a wavelength of 335 nm is highest.

Accordingly the present invention provides for the detection of selenium by selecting the peak at a wavelength of 335 nm or two or more peaks from the above-described peaks 1 to 16 and simultaneously measuring.

In principle, the method of detecting and determining selenium quantitatively according to the present invention can be carried out by an apparatus exemplified in Figure 2. Referring to Figure 2, emitting stage 1 emits a light corresponding to the wavelength of one of the above-described peaks 1 to 16 of gaseous selenium. For example, the emitting stage 1 consists of a light source comprising a hollow-cathode lamp provided with filters each having a centre frequency corresponding to each of the spectral lines 1 to 16. Sample chamber 2 is a furnace or cell provided with a heating means, which has a structure capable of retaining selenium gas, a window 3 permitting the passage of incident light from emitting stage 1 and another window 4 permitting the passage of transmitted light, after absorption thereof by the selenium gas, to a subsequent photo-receiving stage 5 comprising an ordinary monochromator, detector, amplifier and meter.

The principle of the method of detecting and determining selenium quantitatively according to the present invention lies in that the peak absorption of wavelengths corresponding to the lines 1 to 16 shown in Figure 1 can be obtained in proportion to the concentration of gaseous selenium. When the intensity of an incident light upon a sample chamber is represented by $I_o$, the intensity of the transmitted light after absorption by gaseous selenium is represented by I, the absorption of the light by the gaseous selenium in the sample chamber is represented by T (%), the absorbance is D and the concentration of the gaseous selenium is C, there are the following relationships:

$$T\ (\%)\ =\ I/I_o \times 100$$

$$D\ =\ \log \frac{1}{T\ (\%)}$$

$$D\ =\ kC \qquad \text{(where k is a constant of proportionality)}$$

On the other hand, it has been found that there is the relationship as shown in Figure 3 between the weight of selenium and absorbance D, i.e.

$$\log \frac{1}{T\ (\%)}.$$

Referring to Figure 3 , Point A represents the saturation point of selenium gas at a temperature t, which is defined by the vapour pressure of selenium as shown in the following formula:

$$\log P\ (t)\ (mmHg)\ =\ -\frac{4990}{t}\ +\ 8.09$$

wherein t is an absolute temperature.

The invention may be performed with the apparatus shown in Figure 4. A sample chamber 2 provided with heater 6 received a sample containing selenium. The sample is heated to and maintained at a temperature of 450°C to obtain the absorption spectrum shown in Figure 1. When various samples are subjected to measurement or analysis selecting two or more peaks from the peaks 1 to 16, quantitative determination of selenium of the order of 0.01 ppm is possible.

For the further purposes of controlling the quantity of selenium supplied in a process or controlling the pressure of selenium, the method and monitor apparatus of the present invention can be usefully applied in various processes and apparatus for the production of semiconductors or semiconductor devices using selenium or to waste disposal apparatus. Examples are apparatus for the epitaxial growth of compound semiconductors such as ZnSe, CdSe and the like (CVD furnaces, LPE furnaces, etc), high pressure HB furnaces, annealing furnaces, selenium pressure annealing furnaces, MBE apparatus, MOCVD apparatus and furnaces for melting alloys, ceramics and glasses containing selenium.

## Claims

1. A method of quantitative determination of selenium, comprising illuminating a sample containing gaseous selenium with radiation at a wavelength of 335 nm, said sample being at a temperature lower than the atomizing temperature of selenium and measuring the absorption of the said component at said wavelength by the gaseous selenium in the sample.

2. A method of quantitative determination of selenium comprising illuminating a sample containing gaseous selenium with radiation at at least two wavelengths selected from 324 nm, 326 nm, 328 nm, 330 nm, 332.5 nm, 335 nm, 337.5 nm, 340 nm. 342 nm, 344.5 nm, 347 nm, 350 nm, 352.5 nm, 355 nm, 357.5 nm, and 360 nm, said sample being at a temperature lower than the atomizing temperature of selenium, and measuring the absorption at the selected wavelengths by the gaseous selenium in the sample.

3. A method according to claim 1 or claim 2 wherein the temperature of the selenium is between 220 and 1000°C.

4. An apparatus arranged to quantitatively determine gaseous selenium in a sample, comprising a chamber provided window portions and a heating means to heat the sample, only to temperatures lower than the atomising temperature of selenium, a source of light and means for receiving light from the source by way of the chamber, the means for receiving including means for measuring the absorbtion of light by gaseous selenium in the sample, wherein, the source provides a spectral line at a wavelength of 335 nm or spectral lines at two or more wavelengths selected from 324 nm, 326 nm, 328 nm, 330 nm, 332.5 nm, 335 nm, 337.5 nm, 340 nm, 342 nm, 344.5 nm, 347 nm, 350 nm, 352.5 nm, 355 nm, 357.5 nm and 360 nm.

**Revendications**

1. Procédé de détermination quantitative du sélénium comprenant l'éclairement d'un échantillon contenant du sélénium gazeux avec un rayonnement à une longueur d'onde de 335 nm, ledit échantillon se trouvant à une température inférieure à la température d'évaporation du sélénium et la mesure de l'absorption dudit composant à ladite longueur d'onde par le sélénium gazeux présent dans l'échantillon.

2. Procédé de détermination quantitative du sélénium comprenant l'éclairement d'un échantillon contenant du sélénium gazeux avec un rayonnement à deux longueurs d'onde au moins choisies parmi 324 nm: 326 nm, 328 nm, 330 nm, 332,5 nm, 335 nm, 337,5 nm, 340 nm, 342 nm, 344,5 nm, 347 nm, 350 nm, 352,5 nm, 355 nm, 357,5 nm et 360 nm, ledit échantillon se trouvant à une température inférieure à la température d'évaporation du sélénium et la mesure de l'absorption aux longueurs d'onde choisies par le sélénium gazeux présent dans l'échantillon.

3. Procédé selon la revendication 1 ou 2, dans lequel la température du sélénium est comprise entre 220 et 1000° C.

4. Dispositif conçu pour déterminer quantitativement le sélénium gazeux présent dans un échantillon comprenant une chambre comportant des parties de fenêtre, et un moyen de chauffage permettant de chauffer l'échantillon jusqu'à seulement des températures inférieures à la température d'évaporation du sélénium, une source de lumière et un moyen destiné à recevoir la lumière provenant de la source en passant par la chambre, le moyen destiné à recevoir comprenant un moyen permettant de mesurer l'absorption de lumière par le sélénium gazeux dans l'échantillon, dans lequel la source fournit une ligne spectrale à une longueur d'onde de 335 nm ou des lignes spectrales à deux longueurs d'onde au moins choisies parmi 324 nm, 326 nm, 328 nm, 330 nm, 332,5 nm, 335 nm, 337,5 nm, 340 nm, 342 nm, 344,5 nm, 347 nm, 350 nm, 352,5 nm, 355 nm, 357,5 nm et 360 nm.

**Patentansprüche**

1. Verfahren zur quantitativen Bestimmung von Selen, umfassend die Bestrahlung einer gasförmiges Selen enthaltenden Probe mit Strahlung bei einer Wellenlänge von 335 nm, wobei sich die Probe bei einer Temperatur unterhalb der Atomisierungstemperatur von Selen befindet, und Messung der Absorption der Komponente bei der Wellenlänge mittels des gasförmigen Selens in der Probe.

2. Verfahren zur quantitativen Bestimmung von Selen, umfassend eine Bestrahlung einer gasförmiges Selen enthaltenden Probe mit Strahlung bei wenigstens zwei Wellenlängen, ausgewählt aus 324 nm, 326 nm, 328 nm, 330 nm, 332,5 nm, 335 nm, 337,5 nm, 340 nm, 342 nm, 344,5 nm, 347 nm, 350 nm, 352,5 nm, 355 nm, 357,5 nm und 360 nm, wobei sich die Probe bei einer Temperatur unterhalb der Atomisierungstemperatur von Selen befindet, und Messen der Absorption bei den ausgewählten Wellenlängen mittels des gasförmigen Selens in der Probe.

3. Verfahren nach Anspruch 1 oder Anspruch 2, worin die Temperatur des Selens zwischen 220 und 1000 °C liegt.

4. Zur quantitativen Bestimmung gasförmigen Selens in einer Probe eingerichtete Vorrichtung, umfassend eine mit Fensterbereichen und einem Heizmittel zum Aufheizen der Probe nur auf Temperaturen unterhalb der Atomisierungstemperatur von Selen versehene Kammer, eine Lichtquelle und Mittel zur Aufnahme von Licht aus der Lichtquelle auf dem Weg aus der Kammer heraus, wobei das Mittel zur Aufnahme Mittel zur Messung der Absorption von Licht aus gasförmigem Selen in der Probe einschließt, worin die Lichtquelle eine Spektrallinie bei einer Wellenlänge von 335 nm oder Spektrallinien bei zwei oder mehr Wellenlängen aus der Gruppe 324 nm, 326 nm, 328 nm, 330 nm, 332,5 nm, 335 nm, 337,5 nm, 340 nm, 342 nm, 344,5 nm, 347 nm, 350 nm, 352,5 nm, 355 nm, 357,5 nm und 360 nm liefert.

FIG. 1

1/2

FIG. 2

FIG. 3

# FIG. 4

# FIG. 5

# FIG. 6

8